# EUROPÄISCHE PATENTSCHRIFT

(11) **EP 2 855 334 B1**
(45) Veröffentlichungstag und Bekanntmachung des Hinweises auf die Patenterteilung: **21.08.2019**
(21) Anmeldenummer: 13716010.7
(22) Anmeldetag: 16.04.2013
(51) Int. Cl.: B66C 23/82

(54) **WIPPAUSLEGER -TURMKRAN UMFASSEND EINE ELEKTROHYDRAULISCHE VORRICHTUNG MIT DREHSTROMASYNCHRONMOTOR ZUR VERSTELLUNG EINES AUSLEGERS**
LUFFING JIB TOWER CRANE COMPRISING AN ELECTRO-HYDRAULIC DEVICE WITH A THREE-PHASE ASYNCHRONOUS MOTOR FOR MOVING A JIB
GRUE À TOUR À FLÈCHE RELEVABLE COMPRENANT UN DISPOSITIF ÉLECTROHYDRAULIQUE AVEC UN MOTEUR ASYNCHRONE TRIPHASÉ POUR LA COMMANDE D'UNE FLÈCHE

(30) Priorität: 31.05.2012 DE 102012010760
(43) Veröffentlichungstag der Anmeldung: 08.04.2015
(73) Patentinhaber: Wolffkran Holding AG, 6300 Zug (CH)
(72) Erfinder: DÖRZBACH, Ulrich, 74074 Heilbronn (DE); WAGNER, Andreas, 74388 Talheim (DE)
(74) Vertreter: DREISS Patentanwälte PartG mbB
(86) Internationale Anmeldenummer: PCT/EP2013/057910
(87) Internationale Veröffentlichungsnummer: WO 2013/178399

(56) Entgegenhaltungen:
- EP-A2- 0 734 993
- WO-A1-2011/098542
- FR-A5- 2 071 141

## Beschreibung

Die Erfindung betrifft einen Wippausleger-Turmkran mit einer elektrohydraulischen Vorrichtung zur Verstellung eines Auslegers des Wippausleger-Turmkrans.

Elektrohydraulische Vorrichtungen zum Verstellen des Auslegers eines Wippausleger-Turmkrans sind bekannt. Diese umfassen ein Hydraulikaggregat und einen Hydraulikzylinder. Die WO 2011/098542 A1 offenbart einen Hafenmobilkran mit einem Wippausleger, umfassend eine elektrohydraulische Vorrichtung zur Verstellung des Wippauslegers, wobei der Motor des Hydraulikaggregats ein Drehstromasynchronmotor ist.

Ein Hydraulikaggregat umfasst üblicherweise einen Öltank, eine Pumpe, einen Elektromotor - üblicherweise ein Drehstromasynchronmotor -, Ventile für die Richtungsumstellung, ein verstellbares Ventil für die Einstellung verschiedener Arbeitsgeschwindigkeiten und eine hydraulische Leistungsregelung. Das Hydraulikaggregat stellt am Hydraulikzylinder Öl in der für das Verstellen des Lastauslegers erforderlichen Menge und mit dem erforderlichen Druck zur Verfügung. Wenn der Hydraulikzylinder ein- oder ausgefahren werden soll, bedeutet dieses eine Änderung des am Hydraulikzylinder benötigten Druckes. Je nach dem benötigten Druck wird der Ölstrom gesteuert.

Die Maximalleistung der elektrohydraulischen Vorrichtung ist erforderlich, wenn der Wippausleger bei maximaler Ausladung mit maximaler Traglast "eingewippt" werden soll, also nach innen zum Turm hin nach oben bewegt werden soll.

In herkömmlichen elektrohydraulischen Vorrichtungen zur Auslegerverstellung ist der Motor auf die jeweils benötigte Maximalleistung ausgelegt. Dieses bedeutet aber, dass der Motor die überwiegende Zeit im energieverschwendenden Teillastbereich arbeitet. Drehstromasynchronmotoren beispielsweise haben ihre geringsten Verluste im Nennarbeitspunkt.

Aufgabe der Erfindung ist es, eine elektrohydraulische Vorrichtung zur Verstellung eines Auslegers eines Wippausleger-Turmkrans bereitzustellen, das kostengünstiger ist und energetisch wirtschaftlicher arbeitet als herkömmliche Systeme.

Gelöst wird die Aufgabe durch den Gegenstand des Patentanspruchs 1.

Überraschenderweise hat sich nun gezeigt, dass bei elektrohydraulischen Vorrichtungen zur Auslegerverstellung bei Wippausleger-Turmkranen eine auf die Maximalleistung ausgerichtete Auslegung der hydraulischen Leistungsregelung verzichtbar ist, wenn der Motor ein Drehstromasynchronmotor ist und der Drehstromasynchronmotor zumindest auf die mittlere benötigte Leistung ausgelegt ist. Diese Lösung ist möglich, da das Wippwerk im Mittel nur ungefähr 40 Prozent der "Arbeitszeit" arbeitet. Hinzu kommt, dass tatsächlich die maximale Traglast nur selten bewegt wird. Die Veränderung der Stellung des Wippauslegers von der maximalen Ausladung bis zur minimalen Ausladung dauert üblicherweise nicht länger als 90 Sekunden. Der Motor hat daher stets ausreichend Zeit, um wieder abzukühlen. Während dieser Veränderung des Stellung des Auslegers nach innen ("Einwippen") nimmt die Überlastung stetig ab.

Asynchronmotoren sind überlastbar. Das folgende Diagramm zeigt, wie sich die erforderliche elektrische Leistung P bezogen auf die Motor-Nennleistung in Abhängigkeit von der Ausladung verändert.

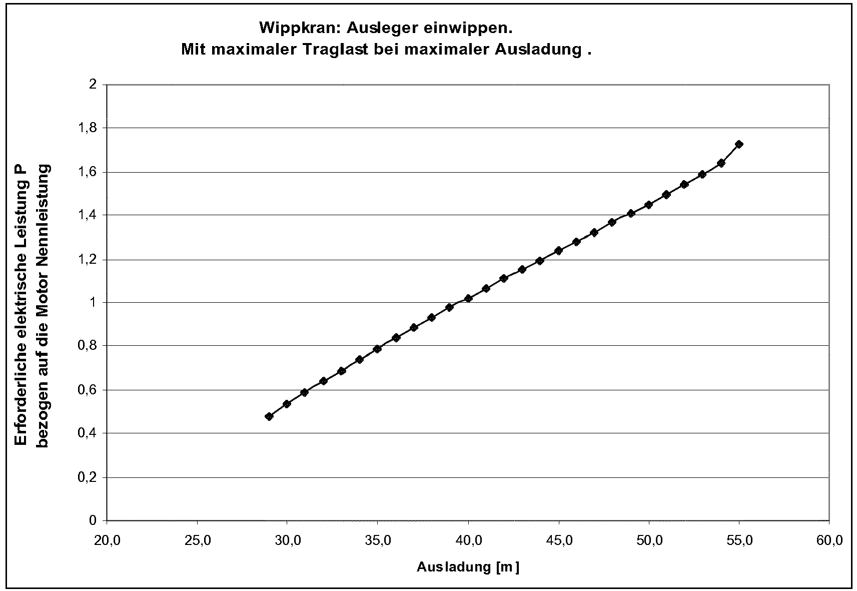

Die mit der erfinderischen Lösung einhergehende gelegentliche gezielte Überlastung ist möglich, da das benötigte Drehmoment und den Drehmomentverlauf des Motors jeweils bekannt sind. Alle anderen Komponenten sind vorzugsweise für das höhere Drehmoment ausgelegt.

Vorzugsweise wird der Motor darüber hinaus durch einen Übertemperaturschutz geschützt.

## Patentansprüche

1. Wippausleger-Turmkran, umfassend eine elektrohydraulische Vorrichtung zur Verstellung eines Auslegers des Wippausleger-Turmkrans, wobei der Motor des Hydraulikaggregats ein Drehstromasynchronmotor ist, **dadurch gekennzeichnet, dass** der Drehstromasynchronmotor auf eine Leistung ausgelegt ist, die zwischen der Maximalleistung und ungefähr der mittleren benötigten Leistung liegt, wobei die Maximalleistung der elektrohydraulischen Vorrichtung erforderlich ist, wenn der Wippausleger bei maximaler Ausladung mit maximaler Traglast eingewippt werden soll.

2. Wippausleger-Turmkran nach Anspruch 1, **dadurch gekennzeichnet, dass** der Drehstromasynchronmotor einen Übertemperaturschutz aufweist.

## Claims

1. A luffing jib tower crane, comprising an electro-hydraulic device for moving a jib of the luffing jib tower crane, wherein the motor of the hydraulic aggregate is a three-phase asynchronous motor, **characterized in that** the three-phase asynchronous motor is configured for a power output that is between a respectively required maximum power output and a medium power output, wherein the maximum power output is required when the luffing jib at maximum overhang with maximum load is to be swung inward.

2. The luffing jib tower crane of claim 1, wherein the three-phase asynchronous motor has an over-temperature protection.

## Revendications

1. Grue à tour à flèche articulée, comprenant un dispositif électrohydraulique de réglage d'une flèche de la grue à tour à flèche articulée, dans laquelle le moteur de l'unité hydraulique est un moteur asynchrone triphasé, **caractérisée en ce que** le moteur asynchrone triphasé est conçu pour une puissance comprise entre la puissance maximum et approximativement la puissance moyenne nécessaire, dans laquelle la puissance maximum du dispositif électrohydraulique est requise lorsque la flèche articulée doit être balancée par un déchargement maximum avec une charge maximum.

2. Grue à tour à flèche articulée selon la revendication 1, **caractérisée en ce que** le moteur asynchrone triphasé présente une protection contre une surchauffe.
